(19) **Europäisches Patentamt**
**European Patent Office**
**Office européen des brevets**

(11) **EP 4 507 158 A1**

(12) **EUROPEAN PATENT APPLICATION**
published in accordance with Art. 153(4) EPC

(43) Date of publication:
**12.02.2025 Bulletin 2025/07**

(21) Application number: **23881262.2**

(22) Date of filing: **21.06.2023**

(51) International Patent Classification (IPC):
*H02J 7/00* (2006.01)

(52) Cooperative Patent Classification (CPC):
**H01M 10/44; H02J 7/00**

(86) International application number:
**PCT/CN2023/101735**

(87) International publication number:
**WO 2024/087672 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.10.2022 CN 202211308046**

(71) Applicant: **Huawei Technologies Co., Ltd.
Shenzhen, Guangdong 518129 (CN)**

(72) Inventors:
• **HU, Zhangrong
Shenzhen, Guangdong 518129 (CN)**
• **SHEN, Pengpeng
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **CHARGING AND DISCHARGING CIRCUIT AND ELECTRONIC DEVICE**

(57) This application provides a charging/discharging circuit and an electronic device, and relates to the field of electronic technologies, to improve utilization of a switched capacitor circuit and reduce an area of the charging/discharging circuit. The charging/discharging circuit provided in this application includes a switched capacitor SC circuit, configured to charge/discharge a battery. The switched capacitor SC circuit includes a first end, configured to receive an input power supply voltage; a second end, configured to: provide a charging voltage for a battery in a charging process, and receive a discharging voltage released by the battery in a discharging process; and a third end, configured to provide an output voltage, where the output voltage is a direct current voltage or a pulse width modulation PWM voltage.

Third end

First end — Switched capacitor SC circuit 401 — Second end

FIG. 4

## Description

This application claims priority to Chinese Patent Application No. 202211308046.0, filed with the China National Intellectual Property Administration on October 24, 2022 and entitled "CHARGING/DISCHARGING CIRCUIT AND ELECTRONIC DEVICE", which is incorporated herein by reference in its entirety.

## TECHNICAL FIELD

This application relates to the field of electronic technologies, and in particular, to a charging/discharging circuit and an electronic device.

## BACKGROUND

Currently, consumer electronic devices such as notebook computers, tablet computers, mobile phones, vehicle-mounted devices, and wearable devices use a silicon material as negative electrodes of batteries (silicon negative electrode batteries for short) in the electronic devices. Compared with a conventional graphite battery, the silicon negative electrode battery has a larger battery capacity and a longer battery life. In a charging stage, an electronic device needs to obtain energy from an external power supply to charge a silicon negative electrode battery and provide energy for a load. In a discharging stage, the silicon negative electrode battery of the electronic device needs to discharge to provide energy for the load. For example, energy (a voltage less than 3.2 volts (V)) that is in a low-voltage region and that is released by the silicon negative electrode battery may be boosted to provide energy for the load, to meet a power supply requirement of the load. Therefore, a charging/discharging circuit is needed to maintain operation of the electronic device.

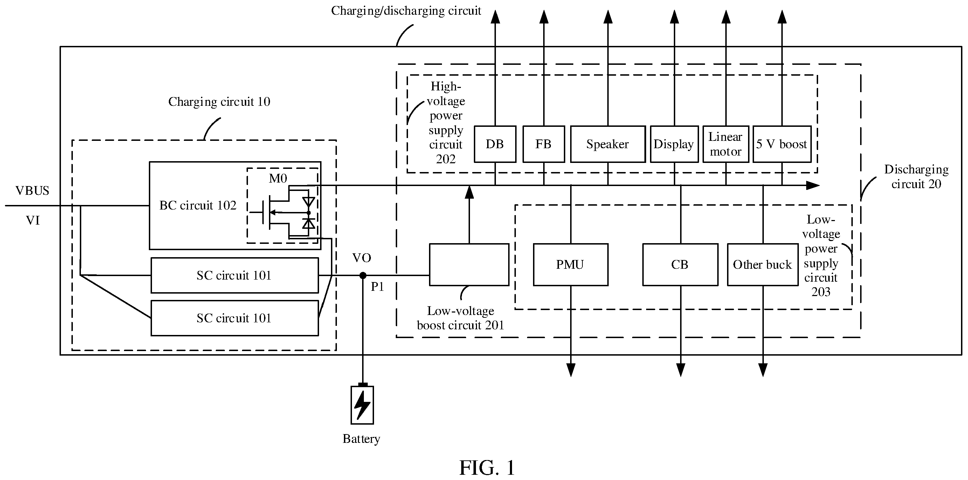

FIG. 1 is a diagram of a structure of a charging/discharging circuit according to the conventional technology. The charging/discharging circuit includes a charging circuit 10 and a discharging circuit 20. An input end of the charging circuit 10 serves as an input end of the charging/discharging circuit and is connected to an external power supply via a power line (VBUS), and an output end of the charging circuit 10 is connected to a first input end of the discharging circuit 20. An input/output end of the charging circuit 10, a second input end of the discharging circuit 20, and a battery are coupled to a first node P1. A plurality of output ends of the discharging circuit 20 serve as a plurality of output ends of the charging/discharging circuit and are separately connected to a load. Specifically, in a charging process of the charging/discharging circuit, an input voltage V1 provided by the external power supply is converted into an output voltage VO via the charging circuit 10, and the output voltage VO is used to charge the battery. For example, the charging circuit 10 may include switched capacitor (switched capacitor, SC) circuits 101, a buck charging (buck charge, BC) circuit 102, and a charging/discharging transistor M0. In a scenario in which fast charging is required, the input voltage V1 provided by the external power supply is converted into the output voltage VO via the SC circuits 101, and the output voltage VO is used to charge the battery. In a common charging scenario, the input voltage V1 provided by the external power supply is converted into the output voltage VO via the BC circuit 102 and M0, and the output voltage VO is used to charge the battery. In a discharging process of the charging/discharging circuit, energy released by the battery supplies power to the loads via the discharging circuit 20. For example, the discharging circuit 20 may include a low-voltage boost circuit 201, a plurality of high-voltage power supply circuits 202, and a plurality of low-voltage power supply circuits 203. If the energy released by the battery is energy in a high-voltage region (that is, the voltage released by the battery is greater than or equal to 3.2 V), the energy released by the battery separately supplies power to the loads via M0, the plurality of high-voltage power supply circuits 202, and the plurality of low-voltage power supply circuits 203. If the energy released by the battery is energy in a low-voltage region (that is, the voltage released by the battery is less than 3.2 V), the energy released by the battery supplies power to corresponding loads via the low-voltage boost circuit 201, the plurality of high-voltage power supply circuits 202, and the plurality of low-voltage power supply circuits 203. The plurality of high-voltage power supply circuits 202 may include a buck boost (buck boost, BB) power supply circuit, a flash boost (flash boost, FB) power supply circuit, a display power supply circuit, a speaker power supply circuit, a linear motor power supply circuit, a 5 V boost power supply circuit, and the like. The plurality of low-voltage power supply circuits 203 may include a power management unit (power management unit, PMU) power supply circuit, a processor buck (core buck, CB) power supply circuit, another buck power supply circuit, and the like.

However, the SC circuit is used only in a fast charging scenario, and utilization is low. In addition, to make full use of energy in a low-voltage region of the silicon negative electrode battery, a low-voltage boost circuit needs to be additionally added to boost a low voltage released by a battery, thereby increasing an area of the charging/discharging circuit.

## SUMMARY

This application provides a charging/discharging circuit and an electronic device, to improve utilization of a switched capacitor circuit and reduce an area of the charging/discharging circuit.

To achieve the foregoing objectives, the following technical solutions are used in embodiments of this application.

According to a first aspect, a charging/discharging circuit is provided. The charging/discharging circuit includes a switched capacitor SC circuit, configured to charge/discharge a battery. The switched capacitor SC circuit includes: a first end, configured to receive an input power supply voltage; a second end, configured to: provide a charging voltage for the battery in a charging process, and receive a discharging voltage released by the battery in a discharging process; and a third end, configured to provide an output voltage, where the output voltage is a direct current voltage or a pulse width modulation (Pulse Width Modulation, PWM) voltage.

In the foregoing technical solution, when fast charging is performed on the battery, the input power supply voltage may be converted into the charging voltage via the switched capacitor SC circuit in the charging/discharging circuit, to charge the battery; when the battery is discharged, the discharging voltage released by the battery may be converted into a load voltage via the switched capacitor SC circuit, and the load voltage may be used to supply power to a load. For example, when the battery releases energy in a low-voltage region, the switched capacitor SC circuit boosts the energy in the low-voltage region and converts the energy into the load voltage. In this process, the switched capacitor SC circuit may charge the battery, or may discharge the battery. This improves utilization of the switched capacitor SC circuit. In addition, compared with the charging/discharging circuit shown in FIG. 1, an area of the charging/-discharging circuit is reduced.

In a possible implementation of the first aspect, the output voltage is the pulse width modulation PWM voltage, and the charging/discharging circuit further includes a direct current conversion circuit, where an input end of the direct current conversion circuit is coupled to the third end, and an output end of the direct current conversion circuit is coupled to a load; and the direct current conversion circuit is configured to convert the pulse width modulation PWM voltage into a direct current voltage, where the direct current voltage is used to supply power to the load. In the foregoing possible implementation, the pulse width modulation PWM voltage is converted into the direct current voltage via the direct current conversion circuit, and the direct current voltage may be used to supply power to the load, so that a power supply requirement of the load is met, and power is supplied to the load.

In a possible implementation of the first aspect, the direct current conversion circuit includes a direct current conversion component and a first capacitor; and one end of the direct current conversion component is coupled to the input end of the direct current conversion circuit, the other end of the direct current conversion component and one end of the first capacitor are separately coupled to the output end of the direct current conversion circuit, the other end of the first capacitor is grounded, and the direct current conversion component is a first inductor or a first transistor. In the foregoing possible implementation, the pulse width modulation PWM voltage is converted into the direct current voltage via the direct current conversion component and the first capacitor, and the direct current voltage may be used to supply power to the load, so that a power supply requirement of the load is met, and power is supplied to the load.

In a possible implementation of the first aspect, the charging/discharging circuit further includes a buck (Buck) circuit, an input end of the buck (Buck) circuit is coupled to the third end, and an output end of the buck (Buck) circuit is coupled to a load; and in the charging process or the discharging process, when the discharging voltage is less than a first voltage threshold, the buck (Buck) circuit is configured to convert the output voltage into a load voltage, where the load voltage is used to supply power to the load. In the foregoing possible implementation, a simple buck (Buck) circuit may convert, via the buck circuit, the output voltage provided by the third end into the load voltage, and perform low-voltage common charging on the battery. This meets charging requirements of different batteries, and improves utilization of the charging/discharging circuit.

In a possible implementation of the first aspect, the buck (Buck) circuit includes a second transistor, a third transistor, a second inductor, and a second capacitor; and one end of the second transistor is coupled to the input end of the buck (Buck) circuit, the other end of the second transistor, one end of the third transistor, and one end of the second inductor are coupled to a first node, both the other end of the second inductor and one end of the second capacitor are coupled to the output end of the buck (Buck) circuit, both the other end of the third transistor and the other end of the second capacitor are grounded, and a control end of the second transistor and a control end of the third transistor are respectively configured to receive a first control signal and a second control signal. In the foregoing possible implementation, in a working process of the buck (Buck) circuit, the second transistor, the third transistor, and the second inductor output the load voltage based on the output voltage, to supply power to the load.

In a possible implementation of the first aspect, the first control signal is used to turn on the second transistor, and the second control signal is used to turn off the third transistor; or the first control signal is used to turn off the second transistor, and the second control signal is used to turn on the third transistor. In the foregoing possible implementation, in a working process of the buck (Buck) circuit, the second transistor, the third transistor, and the second inductor output the load voltage based on the output voltage, to supply power to the load.

In a possible implementation of the first aspect, the charging/discharging circuit further includes a charging/discharging transistor; and one end of the charging/discharging transistor is coupled to the output end of a buck (Buck) circuit, the other end of the charging/discharging transistor is coupled to the second end, and a control end of the charging/discharging transistor is configured to receive a charging/discharging control signal; in the discharging process, when the discharging voltage is less than the first voltage threshold, the charging/discharging control signal is used to turn off the charging/discharging transistor; in the discharging process, when the discharging voltage is greater than or equal to a second voltage threshold, the charging/discharging control signal is used to turn on the charging/discharging transistor, and the charging/discharging transistor is configured to convert the discharging voltage into the load voltage, where the second voltage threshold is greater than or equal to the first voltage threshold; and in the charging process, when the input power supply voltage is less than or equal to a third voltage threshold, the charging/discharging control signal is used to turn on the charging/discharging transistor, and the charging/discharging transistor is configured to convert the load voltage into the charging voltage, where the charging voltage is used to charge the battery. In the foregoing possible implementation, in the charging process, when the input power supply voltage is less than or equal to the third voltage threshold, the charging/discharging transistor may output the charging voltage based on the load voltage; in the charging process, when the input power supply voltage is greater than a fourth voltage threshold, the charging/discharging transistor is configured to convert the discharging voltage into the load voltage; and in the discharging process, when the discharging voltage is greater than or equal to the second voltage threshold, the charging/discharging transistor may further output the load voltage based on the discharging voltage. An electric energy loss is minimized when charging/discharging is performed by using the charging/discharging transistor. This improves charging/discharging efficiency of the charging/discharging circuit.

In a possible implementation of the first aspect, in the charging process, when the input power supply voltage is less than or equal to the third voltage threshold, the switched capacitor SC circuit is configured to convert the input power supply voltage into the output voltage; in the charging process, when the input power supply voltage is greater than a fourth voltage threshold, the switched capacitor SC circuit is further configured to convert the input power supply voltage into the charging voltage, where the fourth voltage threshold is greater than or equal to the third voltage threshold; and in the discharging process, when the discharging voltage is less than the first voltage threshold, the switched capacitor SC circuit is further configured to convert the discharging voltage into the output voltage. In the foregoing possible implementation, the battery is charged/discharged by using the switched capacitor SC circuit. This improves utilization of the switched capacitor SC circuit.

In a possible implementation of the first aspect, the switched capacitor SC circuit includes a fourth transistor, a fifth transistor, a sixth transistor, a seventh transistor, an eighth transistor, a ninth transistor, a tenth transistor, an eleventh transistor, a third capacitor, a fourth capacitor, and a fifth capacitor; and the fourth transistor, the third capacitor, the seventh transistor, and the fourth capacitor are coupled in series between the first end of the switched capacitor SC circuit and a ground, the fourth transistor and the third capacitor are coupled to a second node, the third capacitor and the seventh transistor are coupled to a third node, the seventh transistor and the fourth capacitor are coupled to a fourth node, the sixth transistor is coupled between the third node and the ground, the fifth transistor, the fifth capacitor, and the ninth transistor are coupled in series between the second node and the ground, the fifth transistor and the fifth capacitor are coupled to a fifth node, the fifth capacitor and the ninth transistor are coupled to a sixth node, the tenth transistor is coupled between the sixth node and the second end, the eighth transistor and the eleventh transistor are coupled in series between the fourth node and the second end, the eighth transistor and the eleventh transistor are coupled to the fifth node, and the third end is coupled to the fourth node. In the foregoing possible implementation, the battery is charged/discharged by using the switched capacitor SC circuit. This improves utilization of the switched capacitor SC circuit.

In a possible implementation of the first aspect, in the discharging process, when the discharging voltage is less than the first voltage threshold, a control end of the fourth transistor, a control end of the fifth transistor, a control end of the sixth transistor, and a control end of the seventh transistor are separately configured to receive a third control signal, a control end of the eighth transistor and a control end of the tenth transistor are separately configured to receive a fourth control signal, and a control end of the ninth transistor and a control end of the eleventh transistor are separately configured to receive a fifth control signal, where the third control signal is used to turn off the fourth transistor, the fifth transistor, the sixth transistor, and the seventh transistor, the fourth control signal is used to turn on the eighth transistor and the tenth transistor, and the fifth control signal is used to turn off the ninth transistor and the eleventh transistor; or the third control signal is used to turn off the fourth transistor, the fifth transistor, the sixth transistor, and the seventh transistor, the fourth control signal is used to turn off the eighth transistor and the tenth transistor, and the fifth control signal is used to turn on the ninth transistor and the eleventh transistor. In the foregoing possible implementation, in the foregoing possible implementation, the battery is discharged by using the switched capacitor SC circuit. This improves utilization of the switched capacitor SC circuit.

In a possible implementation of the first aspect, in the charging process, when the input power supply voltage is less than or equal to the third voltage threshold, a control end of the fourth transistor, a control end of the fifth transistor, and a control end of the eighth transistor are separately configured to receive a sixth control signal, and a control end of the sixth transistor, a control end of the seventh transistor, a control end of the ninth transistor, a control end of the tenth transistor, and a control end of the eleventh transistor are separately configured to receive a seventh control signal, where the sixth control signal is used to turn on the fourth transistor, the fifth transistor, and the eighth transistor, and the seventh control signal is used to turn off the sixth transistor, the seventh transistor, the ninth transistor, the tenth transistor, and the eleventh transistor. In the foregoing possible implementation, common charging is performed on the battery by using the switched capacitor SC circuit, to meet charging requirements of different batteries.

In a possible implementation of the first aspect, the switched capacitor SC circuit includes a fourth transistor, a fifth transistor, a sixth transistor, a seventh transistor, an eighth transistor, a ninth transistor, a tenth transistor, an eleventh transistor, a twelfth transistor, a thirteenth transistor, a third capacitor, a fourth capacitor, and a fifth capacitor; and the fourth transistor, the third capacitor, the seventh transistor, the fourth capacitor, and the thirteenth transistor are coupled in series between the first end and the second end of the switched capacitor SC circuit, the fourth transistor and the third capacitor are coupled to a second node, the third capacitor and the seventh transistor are coupled to a third node, the seventh transistor and the fourth capacitor are coupled to a fourth node, the fourth capacitor and the thirteenth transistor are coupled to a fifth node, the sixth transistor is coupled between a ground and the third node, the twelfth transistor is coupled between the ground and the fifth node, the fifth transistor, the fifth capacitor, and the ninth transistor are coupled in series between the second node and the second end, the fifth transistor and the fifth capacitor are coupled to a sixth node, the fifth capacitor and the ninth transistor are coupled to a seventh node, the eighth transistor is coupled between the sixth node and the second end, the tenth transistor is coupled between the seventh node and the second end, the eleventh transistor is coupled between the fourth node and the second end, and the third end is coupled to the second node. In the foregoing possible implementation, the battery is charged/discharged by using the switched capacitor SC circuit. This improves utilization of the switched capacitor SC circuit.

In a possible implementation of the first aspect, in the discharging process, when the discharging voltage is less than the first voltage threshold, a control end of the fourth transistor, a control end of the sixth transistor, a control end of the seventh transistor, a control end of the eleventh transistor, a control end of the twelfth transistor, and a control end of the thirteenth transistor are separately configured to receive a third control signal, a control end of the fifth transistor and a control end of the tenth transistor are separately configured to receive a fourth control signal, and a control end of the eighth transistor and a control end of the ninth transistor are separately configured to receive a fifth control signal, where the third control signal is used to turn off the fourth transistor, the sixth transistor, the seventh transistor, the eleventh transistor, the twelfth transistor, and the thirteenth transistor, the fourth control signal is used to turn on the fifth transistor and the tenth transistor, and the fifth control signal is used to turn off the eighth transistor and the ninth transistor; or the third control signal is used to turn off the fourth transistor, the sixth transistor, the seventh transistor, the eleventh transistor, the twelfth transistor, and the thirteenth transistor, the fourth control signal is used to turn off the fifth transistor and the tenth transistor, and the fifth control signal is used to turn on the eighth transistor and the ninth transistor. In the foregoing possible implementation, in the foregoing possible implementation, the battery is discharged by using the switched capacitor SC circuit. This improves utilization of the switched capacitor SC circuit.

In a possible implementation of the first aspect, in the charging process, when the input power supply voltage is less than or equal to the third voltage threshold, a control end of the fourth transistor is configured to receive a sixth control signal, and a control end of the fifth transistor, a control end of the sixth transistor, a control end of the seventh transistor, a control end of the eighth transistor, a control end of the ninth transistor, a control end of the tenth transistor, a control end of the eleventh transistor, a control end of the twelfth transistor, a control end of the thirteenth transistor are separately configured to receive a seventh control signal, where the sixth control signal is used to turn on the fourth transistor, and the seventh control signal is used to turn off the fifth transistor, the sixth transistor, the seventh transistor, the eighth transistor, the ninth transistor, the tenth transistor, the eleventh transistor, the twelfth transistor, and the thirteenth transistor. In the foregoing possible implementation, common charging is performed on the battery by using the switched capacitor SC circuit, to meet charging requirements of different batteries.

In a possible implementation of the first aspect, the switched capacitor SC circuit includes a fourth transistor, a fifth transistor, a sixth transistor, a seventh transistor, an eighth transistor, a ninth transistor, a tenth transistor, an eleventh transistor, a third capacitor, a fourth capacitor, and a fifth capacitor; and the fourth transistor, the fifth transistor, the sixth transistor, the seventh transistor, the eighth transistor, and the ninth transistor are coupled in series between the first end of the switched capacitor SC circuit and a ground, the fourth transistor and the fifth transistor are coupled to a second node, the fifth transistor and the sixth transistor are coupled to a third node, the sixth transistor and the seventh transistor are coupled to a fourth node, the seventh transistor and the eighth transistor are coupled to a fifth node, the eighth transistor and the ninth transistor are coupled to a sixth node, the tenth transistor and the eleventh transistor are coupled in series between the fifth node and the ground, the tenth transistor and the eleventh transistor are coupled to a seventh node, the third capacitor is coupled between the second node and the seventh node, the fourth capacitor is coupled between the third node and the sixth node, the fifth capacitor is coupled between the fourth node and the seventh node, the fifth node is coupled to the second end, and the third end is coupled to the third node. In the foregoing possible implementation, the battery is charged/-discharged by using the switched capacitor SC circuit. This improves utilization of the switched capacitor SC circuit.

In a possible implementation of the first aspect, in the discharging process, when the discharging voltage is less than the first voltage threshold, a control end of the fourth transistor, a control end of the fifth transistor, a control end of the eighth transistor, and a control end of the ninth transistor are separately configured to receive a third control signal, a control end of the sixth transistor and a control end of the tenth transistor are separately configured to receive a fourth control signal, and a control end of the seventh transistor and a control end of the eleventh transistor are separately configured to receive a fifth control signal, where the third control signal is used to turn off the fourth transistor, the fifth transistor, the eighth transistor, and the ninth transistor, the fourth control signal is used to turn on the sixth transistor and the tenth transistor, and the fifth control signal is used to turn off the seventh transistor and the eleventh transistor; or the third control signal is used to turn off the fourth transistor, the fifth transistor, the eighth transistor, and the ninth transistor, the fourth control signal is used to turn off the sixth transistor and the tenth transistor, and the fifth control signal is used to turn on the seventh transistor and the eleventh transistor. In the foregoing possible implementation, in the foregoing possible implementation, the battery is discharged by using the switched capacitor SC circuit. This improves utilization of the switched capacitor SC circuit.

In a possible implementation of the first aspect, in the charging process, when the input power supply voltage is less than or equal to the third voltage threshold, a control end of the fourth transistor and a control end of the fifth transistor are separately configured to receive a sixth control signal, and the sixth transistor, the seventh transistor, the eighth transistor, the ninth transistor, the tenth transistor, and the eleventh transistor are separately configured to receive a seventh control signal, where the sixth control signal is used to turn on the fourth transistor and the fifth transistor, and the seventh control signal is used to turn off the sixth transistor, the seventh transistor, the eighth transistor, the ninth transistor, the tenth transistor, and the eleventh transistor. In the foregoing possible implementation, common charging is performed on the battery by using the switched capacitor SC circuit, to meet charging requirements of different batteries.

According to a second aspect, a charging/-discharging method is provided. The method is applied to a charging/discharging circuit including a switched capacitor SC circuit, and the switched capacitor SC circuit has a first end, a second end, and a third end. The method includes: The switched capacitor SC circuit converts, in a charging process, an input power supply voltage received by the first end into a charging voltage, and outputs the charging voltage via the second end to charge a battery; and the switched capacitor SC circuit converts, in a discharging process, a discharging voltage that is released by the battery and that is received by the second end into an output voltage, and outputs the output voltage via the third end, where the output voltage is a direct current voltage or a pulse width modulation PWM voltage.

According to a third aspect, a power supply chip is provided. The power supply chip includes a charging/-discharging circuit, and the charging/discharging circuit is the charging/discharging circuit provided in any one of the first aspect or the possible implementations of the first aspect.

According to a third aspect, an electronic device is provided. The electronic device includes a load, a battery, and the charging/discharging circuit provided in any one of the first aspect or the possible implementations of the first aspect, an output end of the charging/-discharging circuit is coupled to the load, and an input/output end of the charging/discharging circuit is coupled to the battery.

It may be understood that the charging/discharging method, the power supply chip, and the electronic device provided above all include all content of the charging/discharging circuit provided above. Therefore, for beneficial effects that can be achieved by the charging/-discharging method, the power supply chip, and the electronic device, refer to beneficial effects in the charging/discharging circuit provided above. Details are not described herein again.

## BRIEF DESCRIPTION OF DRAWINGS

FIG. 1 is a diagram of a structure of a charging/-discharging circuit according to the conventional technology;
FIG. 2 is a diagram of a structure of a terminal device according to an embodiment of this application;
FIG. 3 is a diagram of a structure of a charging system according to an embodiment of this application;
FIG. 4 is a diagram of a structure of a charging/-discharging circuit according to an embodiment of this application;
FIG. 5 is a diagram of a structure of a charging/-discharging circuit according to an embodiment of this application;
FIG. 6 is a diagram of a structure of another charging/discharging circuit according to an embodiment of this application;

FIG. 7 is a diagram of a structure of still another charging/discharging circuit according to an embodiment of this application;

FIG. 8 is a diagram of a structure of a charging/-discharging circuit according to an embodiment of this application;

FIG. 9 is a diagram of a structure of another charging/discharging circuit according to an embodiment of this application;

FIG. 10 is a diagram of a structure of a switched capacitor SC circuit according to an embodiment of this application;

FIG. 11 is a diagram of a structure of another switched capacitor SC circuit according to an embodiment of this application; and

FIG. 12 is a diagram of a structure of still another switched capacitor SC circuit according to an embodiment of this application.

## DESCRIPTION OF EMBODIMENTS

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. "At least one of the following items (pieces)" or a similar expression thereof indicates any combination of these items, including a single item (piece) or any combination of a plurality of items (pieces). For example, at least one (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names, functions, or effects. A person skilled in the art may understand that the words such as "first" and "second" do not limit a quantity or an execution sequence. The term "coupling" indicates an electrical connection, including a direct connection through a wire or a connection end or an indirect connection through another component. Therefore, "coupling" should be considered as a generalized electronic communication connection.

A transistor in embodiments of this application may be a metal oxide semiconductor (metal oxide semiconductor, MOS), a type of the transistor may include an N-type metal oxide semiconductor (N-type metal oxide semiconductor, NMOS) transistor and a P-type metal oxide semiconductor (P-type metal oxide semiconductor, PMOS) transistor, and the transistor may alternatively be another type of transistor, for example, a gallium nitride transistor. All transistors in embodiments of this application are described by using a PMOS as an example. The transistor may be a switching transistor, or may be a power transistor. A difference between the switching transistor and the power transistor lies in that the power transistor is a MOS transistor with a small conductive impedance. For example, the power transistor may be a MOS transistor with a conductive impedance at a milli-ohm ($m\Omega$) level. In addition, two transistors coupled in series in this specification may mean that a drain of a first transistor in the two transistors is connected to a source of a second transistor, and both a source of the first transistor and a drain of the second transistor are connected to an external circuit.

Technical solutions provided in embodiments of this application may be applied to various electronic devices including a charging/discharging circuit, and the electronic devices may include a terminal device. The terminal device may include but is not limited to a personal computer, a server computer, a mobile device (such as a mobile phone, a tablet computer, or a media player), a wearable device, a vehicle-mounted device, a consumer terminal device, a mobile robot, a drone, and the like. The following describes a specific structure of the terminal device by using an example in which the electronic device includes the terminal device.

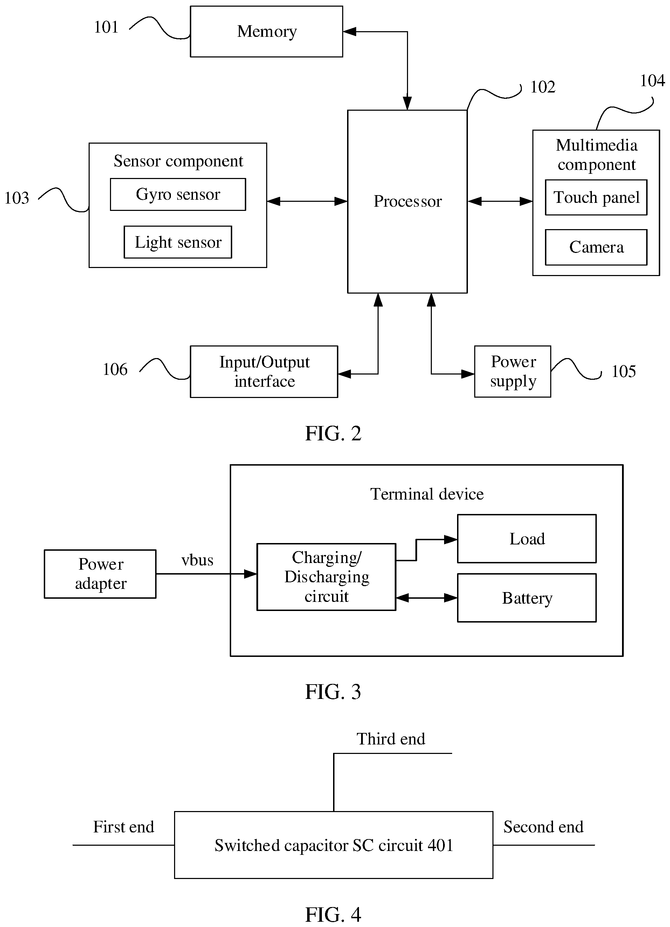

FIG. 2 is a diagram of a structure of a terminal device according to an embodiment of this application. The terminal device is described by using a notebook computer as an example. As shown in FIG. 2, the terminal device may include a memory 101, a processor 102, a sensor component 103, a multimedia component 104, a power supply 105, and an input/output interface 106.

The memory 101 may be configured to store data, a software program, and a software module, and mainly includes a program storage region and a data storage region. The program storage region may store an operating system and an application required by at least one function, for example, a sound playback function or an image playback function. The data storage region may store data created based on use of the terminal device, for example, audio data, image data, or table data. In addition, the terminal device may include a high-speed random access memory, and may further include a non-volatile memory, for example, at least one magnetic disk storage device, a flash storage device, or another volatile solid-state storage device.

The processor 102 is a control center of the terminal device, is connected to all parts of the entire device through various interfaces and lines, and performs various functions of the terminal device and processes data by running or executing a software program and/or a software module stored in the memory 101 and invoking the data stored in the memory 101, to perform overall monitoring on the terminal device. Optionally, the processor 102 may include one or more processing units. For example, the processor 102 may include a central processing unit (central processing unit, CPU), an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural-network processing unit, NPU), and/or the like. Different processing units may be independent components, or may be integrated into one or more processors. In this embodiment of this application, the processor 102 may include the controller, the controller is configured to output different control signals, and the control signals are used to control on/off of a transistor in the charging/discharging circuit at different moments.

The sensor component 103 includes one or more sensors configured to provide the terminal device with status assessment in various aspects. The sensor component 103 may include an acceleration sensor, a gyro sensor, a magnetic sensor, a pressure sensor, or a temperature sensor, and the sensor component 103 may detect acceleration/deceleration, an orientation, an on/off state, relative positioning of a component, a temperature change, or the like of the terminal device. In addition, the sensor component 103 may further include a light sensor. In addition, the sensor component 103 may further include a light sensor configured to detect light of an ambient environment.

The multimedia component 104 is a screen that provides an output interface between the terminal device and a user. The screen may be a touch panel, and when the screen is the touch panel, the screen may be implemented as a touchscreen, to receive an input signal from the user. The touch panel includes one or more touch sensors, to sense a touch, sliding, and a gesture on the touch panel. The touch sensor can not only sense a boundary of a touch or a sliding operation, but also detect duration and pressure associated with the touch or the sliding operation. In addition, the multimedia component 104 further includes at least one camera. For example, the multimedia component 104 includes a front-facing camera and/or a rear-facing camera. When the terminal device is in an operation mode, such as a shooting mode or a video mode, the front-facing camera and/or the rear-facing camera may receive external multimedia data. The front-facing camera and the rear-facing camera each may be a fixed optical lens system or have a focal length and an optical zooming capability.

The power supply 105 is configured to supply power to components of the terminal device. The power supply 105 may include a power management system, one or more power supplies, or other components related to power generation, management, and distribution of the terminal device. In this embodiment of this application, the power supply 105 may include the charging/discharging circuit provided in this specification, and the power supply 105 may further include a battery. The charging/discharging circuit may be configured to supply power to the foregoing components, or may be configured to charge the battery. The battery may also be configured to supply power to the foregoing components.

The input/output interface 106 provides an interface between the processor 102 and a peripheral interface module. For example, the peripheral interface module may be a keyboard, a mouse, or a universal serial bus (universal serial bus, USB) device.

Although not shown, the terminal device may further include an audio component, a communication component, and the like. For example, the audio component includes a microphone, and the communication component includes a wireless fidelity (wireless fidelity, Wi-Fi) module, a Bluetooth module, or the like. Details are not described herein in this embodiment of this application. A person skilled in the art may understand that the structure of the terminal device shown in FIG. 2 does not constitute a limitation on the terminal device, and the terminal device may include more or fewer components than those shown in the figure, or combine some components, or have different component arrangements.

FIG. 3 is a diagram of a structure of a charging system according to an embodiment of this application. The charging system includes a power adapter and a terminal device. The terminal device may specifically be the terminal device shown in FIG. 2. The terminal device includes a charging/discharging circuit, a load, and a battery. The load may specifically be the processor, the memory, the multimedia component, and the like mentioned above, the battery may specifically be the battery included in the power supply described above, and the charging/discharging circuit may specifically be the charging/discharging circuit included in the foregoing power supply. The charging/discharging circuit has an input end, an output end, and an input/output end. An output end of the power adapter may be configured to connect to the input end of the charging/discharging circuit via a power line (vbus), the output end of the charging/discharging circuit may be configured to connect to the load, and the input/output end of the charging/discharging circuit may be configured to connect to the battery. The power adapter may be configured to provide an input power supply voltage for the terminal device. The charging/discharging circuit may be configured to convert the input power supply voltage provided by the power adapter into a load voltage and a charging voltage. The charging/discharging circuit is further configured to convert a discharging voltage provided by the battery into a load voltage. The battery may be configured to store/release electric energy. When the power adapter provides the input power supply voltage for the terminal device, the charging/discharging circuit may convert the input power supply voltage into the load voltage and the charging voltage, where the load voltage may be used to supply power to the load, and the charging voltage may be used to charge the battery. When the input end of the charging/discharging circuit cannot receive the input power supply voltage, the battery may provide the discharging voltage, the discharging voltage is converted into the load voltage via the charging/discharging circuit, and the output voltage may be used to supply power to the load.

FIG. 4 is a diagram of a structure of a charging/discharging circuit according to an embodiment of this application. The charging/discharging circuit may be applied to the terminal device provided above. As shown in FIG. 4, the charging/discharging circuit includes a switched capacitor SC circuit 401 configured to charge/discharge the battery. The switched capacitor SC circuit includes: a first end, configured to receive an input power supply voltage VI; a second end, configured to: provide a charging voltage VC for the battery in a charging process, and receive a discharging voltage VF released by the battery in a discharging process; and a third end, configured to provide an output voltage VO, where the output voltage VO is a direct current voltage or a pulse width modulation PWM voltage. FIG. 4 is a diagram of a structure of the charging/discharging circuit corresponding to a case in which the output voltage VO is the direct current voltage.

The first end may be used as an input end of the charging/discharging circuit, and is configured to receive the input power supply voltage VI, where the input power supply voltage VI may be provided by a power adapter of the terminal device. The second end may be used as an input/output end of the charging/discharging circuit, and is configured to: provide the charging voltage VC in the charging process, and receive the discharging voltage VF in the discharging process, where the charging voltage VC may be used to charge the battery of the terminal device, and the discharging voltage VF may be the discharging voltage VF released by the battery of the terminal device. The third end may be used as an output end of the charging/discharging circuit, and is configured to provide the output voltage VO in the discharging process and the charging process, where the output voltage VO may be used to supply power to the load.

In addition, the third end may be coupled to any node whose voltage is greater than zero and that is in a plurality of nodes included in the switched capacitor SC circuit 401. Due to a feature of the switched capacitor SC circuit 401, the third end of the switched capacitor SC circuit 401 may output different types of output voltages VO. The following separately describes in detail two types of output voltages VO output by the third end.

In a first possible implementation, the output voltage VO of the third end may be the direct current voltage, that is, the output voltage VO is a fixed voltage. It is assumed that when a voltage provided by the second end is Vb, the output voltage VO and the voltage Vb provided by the second end are in a fixed multiple relationship. For example, the output voltage VO may be n times Vb, where n is an integer greater than 1. For example, n may be 2, 3, 4, or 5. In this case, the output voltage VO of the third end is greater than the voltage Vb of the second end.

In a second possible implementation, the output voltage VO of the third end may be the pulse width modulation PWM voltage, and the pulse width modulation PWM voltage may be an alternately changing voltage. It is assumed that a voltage provided by the second end is Vb, the output voltage of the third end may be a voltage that alternates between a times Vb and b times Vb, where both a and b are integers. For example, both a and b may be 0, 1, 2, 3, 4, or 5. For example, the pulse width modulation PWM voltage may be a voltage that alternates between two times Vb and four times Vb, that is, in a working period, the output voltage VO of the third end at a first moment T1 may be two times Vb, and the output voltage VO of the third end at a second moment T2 may be four times Vb.

Specifically, in the charging process of the charging/discharging circuit, the power adapter may be configured to provide the input power supply voltage VI for the first end of the switched capacitor SC circuit 401, and when the input power supply voltage VI is greater than a fourth voltage threshold (that is, in a fast charging stage), the switched capacitor SC circuit 401 is further configured to: convert the input power supply voltage VI into the charging voltage VC and the output voltage VO, output the charging voltage VC via the second end to charge the battery, and output the output voltage VO via the third end to supply power to the load; and in the discharging process of the charging/discharging circuit, the power adapter no longer provides the input power supply voltage VI, the first end of the switched capacitor SC circuit 401 has no input power supply voltage VI, the battery provides the discharging voltage VF, and the switched capacitor SC circuit 401 may be configured to: boost the discharging voltage VF received by the second end, and convert the discharging voltage VF into the output voltage VO, where the output voltage VO may be used to supply power to the load. For example, when the discharging voltage VF is less than a first voltage threshold (that is, the battery releases energy in a low-voltage region), the switched capacitor SC circuit 401 may be configured to: boost the discharging voltage VF, and convert the discharging voltage VF into the output voltage VO, to supply power to the load. The switched capacitor SC circuit 401 may also be referred to as a fast charging circuit.

The first voltage threshold is related to a type of the battery, and different types of batteries correspond to different first voltage thresholds. For example, when the battery is a silicon negative electrode battery, the first threshold may be 3.2 volts (V). This is not specifically limited in this application.

In addition, the fourth voltage threshold may be preset, and a specific value of the fourth voltage threshold may be set based on a value of a capacity of the battery. For example, the fourth voltage threshold may be 9 V. This is not specifically limited in this application.

Moreover, the switched capacitor SC circuit 401 may be a circuit in an equal proportion, that is, in a working process of the switched capacitor SC circuit 401, a ratio of a voltage received by the first end to a voltage provided (output) by the second end may be n: 1, where n is an integer greater than 1. For example, n may be 2, 3, 4, or 5.

Because the third end of the switched capacitor SC circuit 401 may provide different types of output voltages, structures of the charging/discharging circuit vary when types of output voltages are different. The structures of the charging/discharging circuit may be classified into three types based on different types of output voltages. The following separately describes in detail charging/discharging circuits of the three structures.

In a first possible embodiment, the output voltage is the direct current voltage. In this case, a structure of the charging/discharging circuit is the same as the structure of the charging/discharging circuit shown in FIG. 4, and a specific working process of the charging/discharging circuit is the same as a working process of the charging/discharging circuit shown in FIG. 4. Details are not described herein again. In this embodiment, the switched capacitor SC circuit 401 may be configured to charge the battery, and may also be configured to supply power to the load. This improves utilization of the switched capacitor SC circuit. In addition, when the discharging voltage VF is less than the first voltage threshold (that is, the battery releases the energy in the low-voltage region), the switched capacitor SC circuit 401 may be configured to: boost the discharging voltage VF, and convert the discharging voltage VF into the output voltage VO, where the output voltage VO supplies power to the load after being output via the third end. Therefore, no additional boost circuit needs to be added, and compared with the charging/discharging circuit shown in FIG. 1, an area of the charging/discharging circuit is reduced.

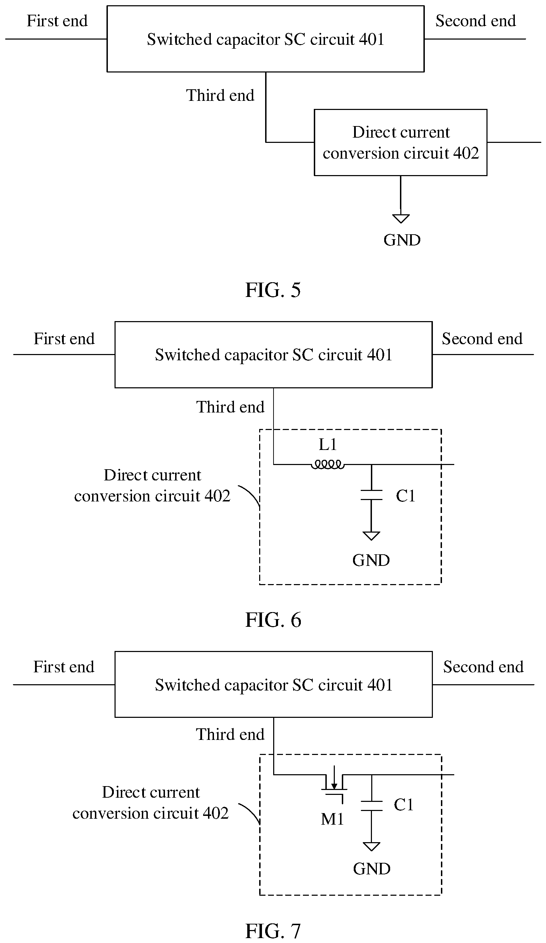

In a second possible embodiment, the output voltage is the pulse width modulation PWM voltage. In this case, a diagram of a structure of the charging/discharging circuit is shown in FIG. 5. The charging/discharging circuit may further include a direct current conversion circuit 402. An input end of the direct current conversion circuit 402 is coupled to the third end, an output end of the direct current conversion circuit 402 is coupled to the load, and a first end of the direct current conversion circuit 402 is connected to a GND. The direct current conversion circuit 402 is configured to convert the pulse width modulation PWM voltage into a direct current voltage, where the direct current voltage is used to supply power to the load. The following describes a specific structure of the direct current conversion circuit 402 with reference to FIG. 6 and FIG. 7.

FIG. 6 is a diagram of a structure of a charging/discharging circuit according to an embodiment of this application. The charging/discharging circuit may include the switched capacitor SC circuit 401 and the direct current conversion circuit 402. The direct current conversion circuit 402 may include a first inductor L1 and a first capacitor C1. One end of the first inductor L1 is coupled to the input end of the direct current conversion circuit 402, the other end of the first inductor L1 and one end of the first capacitor C1 are separately coupled to the output end of the direct current conversion circuit 402, and the other end of the first capacitor C1 is connected to the GND. Specifically, it is assumed that when a voltage provided by the second end is Vb, the output voltage of the third end may be a voltage that alternates between a times Vb and b times Vb, the first inductor L1 and the first capacitor C1 may be configured to convert the output voltage of the third end into a voltage VO1, and the voltage VO1 satisfies Formula (1):

$$VO1 = a \times Vb + (b - a) \times Vb \times D \quad (1).$$

The parameter D is a duty cycle occupied by duration of a voltage, that is, a times Vb, relative to total duration in a pulse cycle, where both a and b are integers. In this case, the voltage VO1 is the direct current voltage, and the voltage VO1 may be used to supply power to the load. It can be learned from Formula (1) that the voltage VO1 may be regulated by using the regulation parameter D, so that the voltage VO1 meets requirements of different loads.

FIG. 7 is a diagram of a structure of another charging/discharging circuit according to an embodiment of this application. The charging/discharging circuit may include the switched capacitor SC circuit 401 and the direct current conversion circuit 402. The direct current conversion circuit 402 may include a first transistor M1 and a first capacitor C1. One end (for example, a source) of the first transistor M1 is coupled to the input end of the direct current conversion circuit 402, the other end (for example, a drain) of the first transistor M1 and one end of the first capacitor C1 are separately coupled to the output end of the direct current conversion circuit 402, the other end of the first capacitor C1 is connected to the GND, and a control end (gate) of the first transistor M1 is configured to receive a first control signal. Specifically, it is assumed that when a voltage provided by the second end is Vb, the output voltage of the third end may be a voltage that alternates between a times Vb and b times Vb, the first control signal may be used to turn on the first transistor M1, the first transistor M1 and the first capacitor C1 may be configured to convert the output voltage of the third end into a voltage VO1, and the voltage VO1 satisfies Formula (2):

$$VO1 = b \times Vb \quad (2).$$

It can be learned from Formula (2) that the voltage VO1 is the direct current voltage, and the voltage VO1 may be used to supply power to the load.

In this embodiment, the direct current conversion circuit converts the pulse width modulation PWM voltage of the third end into the direct current voltage, and the direct current voltage may be used to supply power to the load. Compared with the charging/discharging circuit shown in FIG. 1, an area of the charging/discharging circuit is reduced, and utilization of the switched capacitor SC circuit is improved.

In the charging/discharging circuit provided in this embodiment of this application, when fast charging is performed on the battery, the switched capacitor SC circuit in the charging/discharging circuit may convert the input power supply voltage into the charging voltage to charge the battery; and when the battery is discharged, for example, when the battery releases the energy in the low-voltage region, the switched capacitor SC circuit may boost the energy in the low-voltage region released by the battery and convert the energy in the low-voltage region released by the battery into the load voltage, where the load voltage may be used to supply power to the load. In this process, the switched capacitor SC circuit may charge the battery, or may discharge the battery. Therefore, utilization of the switched capacitor SC circuit is improved. In addition, compared with the charging/discharging circuit shown in FIG. 1, an area of the charging/discharging circuit is reduced.

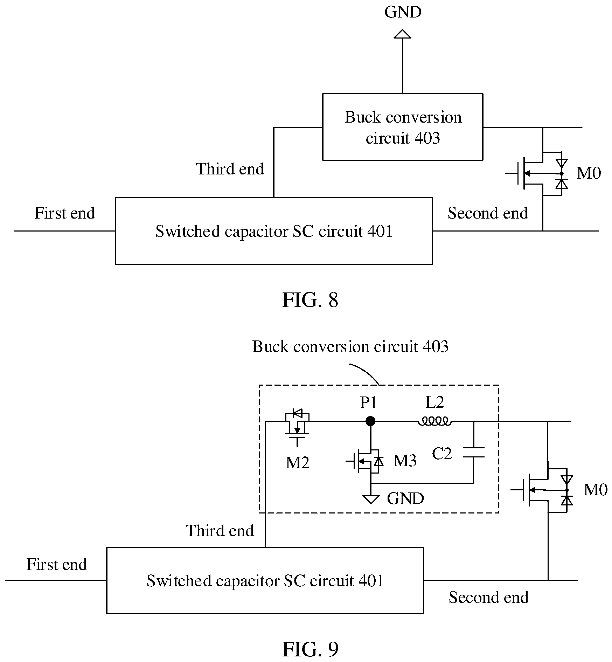

In a possible embodiment, in the charging process of the charging/discharging circuit, when the input power supply voltage VI is less than or equal to a third voltage threshold (that is, in a common charging stage), a diagram of a structure of the charging/discharging circuit is shown in FIG. 8. The charging/discharging circuit may further include a buck (Buck) circuit 403 and a charging/-discharging transistor M0. An input end of the buck (Buck) circuit 403 is coupled to the third end, an output end of the buck (Buck) circuit 403 is coupled to the load, a first end of the buck (Buck) circuit 403 is connected to a GND, a source of the charging/discharging transistor M0 is coupled to the output end of the buck (Buck) circuit 403, a drain of the charging/discharging transistor M0 is coupled to the second end, and a gate of the charging/-discharging transistor M0 may be configured to receive a charging/discharging control signal S0.

The third voltage threshold may be preset. For example, a specific value of the third voltage threshold may be set based on a value of a capacity of the battery, and the fourth voltage threshold may be greater than or equal to the third voltage threshold. For example, when the fourth voltage threshold may be 9 V, the third voltage threshold may be less than or equal to 9 V. This is not specifically limited in this application.

The first end of the switched capacitor SC circuit 401 shown in FIG. 8 may receive different input power supply voltages. Based on different input power supply voltages received by the first end, charging modes of the charging/discharging circuit may be classified into two types. The following separately describes in detail working states of different circuit modules in the charging/-discharging circuit in the two charging modes.

In a first charging mode, when the first end of the switched capacitor SC circuit 401 receives an input power supply voltage VI greater than the fourth voltage threshold, the buck (Buck) circuit 403 does not work, and the charging/discharging transistor M0 and the switched capacitor SC circuit 401 are in a working state. Specifically, the first end of the switched capacitor SC circuit 401 may be configured to receive the input power supply voltage, the second end of the switched capacitor SC circuit 401 may be configured to output a charging voltage based on the input power supply voltage, where the charging voltage may be used to charge the battery, and the charging/discharging transistor M0 may be configured to convert the charging voltage into a load voltage, where the load voltage may be used to supply power to the load. In this case, the load is supplied with power via the charging/discharging transistor M0. The first charging mode is a fast charging mode, that is, a fast charging stage.

On/off of the charging/discharging transistor M0 is related to a value of a discharging voltage of the battery. When the first end of the switched capacitor SC circuit 401 receives the input power supply voltage VI greater than the fourth voltage threshold, a voltage released by the battery is energy in a high-voltage region.

In a second charging mode, when the first end of the switched capacitor SC circuit 401 receives an input power supply voltage VI less than or equal to the third voltage threshold, the switched capacitor SC circuit 401, the buck (Buck) circuit 403, and the charging/discharging transistor M0 are all in a working state. Specifically, the first end of the switched capacitor SC circuit 401 may be configured to receive the input power supply voltage, the third end of the switched capacitor SC circuit 401 may be configured to provide an output voltage based on the input power supply voltage, the input end of the buck (Buck) circuit 403 may be configured to receive the output voltage, and the output end of the buck (Buck) circuit 403 may be configured to output a load voltage based on the output voltage, where the load voltage may be used to supply power to the load, and the load voltage charges the battery via the charging/discharging transistor M0. The second charging mode is a common charging mode, that is, a common charging stage.

The second end of the switched capacitor SC circuit 401 shown in FIG. 8 may receive different discharging voltages. Based on different discharging voltages received by the second end, discharging modes of the charging/discharging circuit may be classified into two types. The following separately describes in detail working states of different circuit modules in the charging/-discharging circuit in the two discharging modes.

In a first discharging mode, when the second end of the switched capacitor SC circuit 401 receives a discharging voltage greater than or equal to a second voltage threshold (that is, a battery releases energy in a high-voltage region), the switched capacitor SC circuit 401 and the buck (Buck) circuit 403 do not work, and the charging/discharging transistor M0 is in a working state. Specifically, the charging/discharging transistor M0 may be configured to convert the discharging voltage released by the battery into a load voltage, where the load voltage may be used to supply power to the load.

The second voltage threshold is related to a type of the battery. Different types of batteries correspond to different second voltage thresholds. The second voltage threshold is greater than or equal to the first threshold voltage. For example, when the first threshold is 3.2 V, the second voltage threshold may be greater than or equal to 3.2 V. This is not specifically limited in this application.

In a second discharging mode, when the second end of the switched capacitor SC circuit 401 receives a discharging voltage less than the first voltage threshold (that is, a battery releases energy in a low-voltage region), the switched capacitor SC circuit 401 and the buck (Buck) circuit 403 are in a working state, and the charging/discharging transistor M0 does not work. Specifically, the second end of the switched capacitor SC circuit 401 may be configured to receive the discharging voltage, the switched capacitor SC circuit 401 may be configured to: boost the discharging voltage, and convert the discharging voltage into an output voltage, the third end of the switched capacitor SC circuit 401 may be configured to provide the output voltage, the input end of the buck (Buck) circuit 403 may be configured to receive the output voltage, and the output end of the buck (Buck) circuit 403 may be configured to output a load voltage based on the output voltage, where the load voltage may be used to supply power to the load. In the discharging mode, the switched capacitor SC circuit 401 may reversely boost the discharging voltage, and the buck (Buck) circuit 403 may stabilize the output voltage and regulate the load voltage output by the output end of the buck (Buck) circuit 403.

The following describes a specific structure of the buck (Buck) circuit 403 with reference to FIG. 9. For example, FIG. 9 is a diagram of a structure of a charging/discharging circuit according to an embodiment of this application. The charging/discharging circuit includes the switched capacitor SC circuit 401, the buck (Buck) circuit 403, and the charging/discharging transistor M0. The buck (Buck) circuit 403 includes a second transistor M2, a third transistor M3, a second inductor L2, and a second capacitor C2. A source of M2 is coupled to the input end of the buck (Buck) circuit 403. A drain of M2, a drain of M3, and one end of L2 are coupled to a first node P1, and both the other end of L2 and one end of the second capacitor C2 are coupled to the output end of the buck (Buck) circuit 403. Both a source of M3 and the other end of the second capacitor C2 are grounded, and a gate of M2 and a gate of M3 are respectively configured to receive a first control signal S1 and a second control signal S2. In FIG. 9, an example in which a gate of the charging/discharging transistor M0 is configured to receive a charging/discharging control signal S0 is used.

In a charging/discharging process of the charging/discharging circuit shown in FIG. 9, if the buck (Buck) circuit 403 is in a working state, in a charging process, the first control signal S1 is used to turn on M2 and the second control signal S2 is used to turn off M3, or the first control signal S1 is used to turn off M2 and the second control signal S2 is used to turn on M3; and in a discharging process, when a discharging voltage is less than the first voltage threshold, the first control signal S1 is used to turn on M2 and the second control signal S2 is used to turn off M3, or the first control signal S1 is used to turn off M2 and the second control signal S2 is used to turn on M3. If the charging/discharging transistor M0 is in a working state, and an input power supply voltage is less than or equal to the third voltage threshold in the charging process, the charging/discharging control signal S0 is used to turn on the charging/discharging transistor M0; and in the discharging process, when a discharging voltage is greater than or equal to the second voltage threshold, the charging/discharging control signal S0 is used to turn on the charging/discharging transistor M0. If the charging/discharging transistor M0 is not in a working state, and an input power supply voltage is greater than the fourth voltage threshold in the charging process, the charging/discharging control signal S0 is used to turn off the charging/discharging transistor M0; and in the discharging process, when a discharging voltage is less than the first voltage threshold, the charging/discharging control signal S0 is used to turn off the charging/discharging transistor M0. In this example, the buck (Buck) circuit 403 may regulate a load voltage. For example, the load voltage at the output end of the buck (Buck) circuit 403 may be regulated by turning on/off the second transistor M2 and the third transistor M3. For example, in a flashlight scenario, the buck (Buck) circuit 403 may convert (direct current conversion and/or buck conversion) an output voltage of the third end into a voltage required by the flashlight (generally 4.5 V).

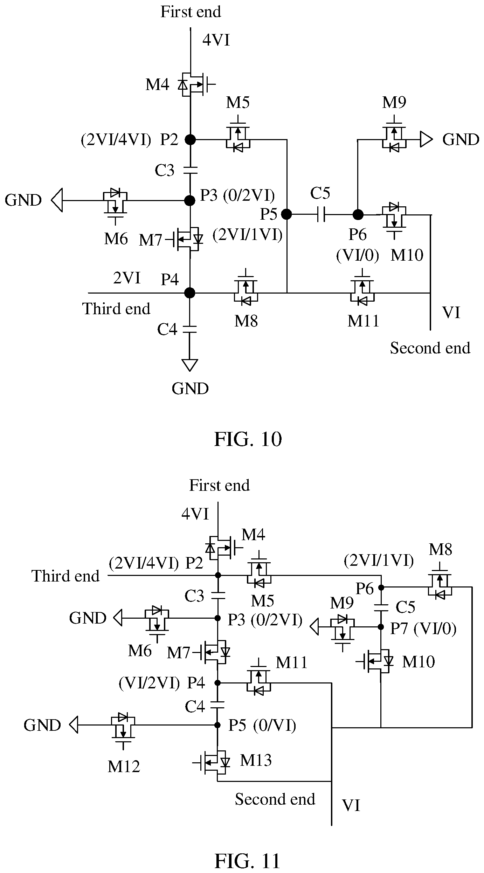

The following describes in detail a specific structure and a working process of the switched capacitor SC circuit 401 with reference to FIG. 10, FIG. 11, and FIG. 12. FIG. 10, FIG. 11, and FIG. 12 show a voltage received by the first end, a voltage provided by the second end, and a voltage on each of a plurality of nodes included in the switched capacitor SC circuit 401 in a working process of the switched capacitor SC circuit 401. In FIG. 10, FIG. 11, and FIG. 12, an example in which a ratio of the voltage received by the first end of the switched capacitor SC circuit 401 to the voltage provided by the second end of the switched capacitor SC circuit 401 is 4:1 is used.

In a possible embodiment, as shown in FIG. 10, the switched capacitor SC circuit 401 includes a fourth transistor M4, a fifth transistor M5, a sixth transistor M6, a seventh transistor M7, an eighth transistor M8, a ninth transistor M9, a tenth transistor M10, an eleventh transistor M11, a third capacitor C3, a fourth capacitor C4, and a fifth capacitor C5. M4, C3, M7, and C4 are coupled in series between the first end of the switched capacitor SC circuit and a GND. A drain of M4 and one end of C3 are coupled to a second node P2, and the other end of C3 and a drain of M7 are coupled to a third node P3. A source of M7 and one end of C4 are coupled to a fourth node P4. M6 is coupled between the third node P3 and the GND. M5, C5, and M9 are coupled in series between the second node P2 and the GND. A drain of M5 and one end of C5 are coupled to a fifth node P5, and the other end of C5 and a source of M9 are coupled to a sixth node P6. M10 is coupled between the sixth node P6 and the second end. M8 and M11 are coupled in series between the fourth node P4 and the second end. A drain of M8 and a source of M11 are coupled to the fifth node P5.

The voltage received by the first end is 4VI, the voltage provided by the second end is VI, a voltage of the second node P2 is a voltage that alternates between 2VI and 4VI, a voltage of the third node P3 is a voltage that alternates between 0 and 2VI, a voltage of the fourth node P4 is 2VI, a voltage of the fifth node P5 is a voltage that alternates between 2VI and VI, and a voltage of the sixth node P6 is a voltage that alternates between VI and 0. In an actual application, the third end may be coupled to any one of the second node P2, the third node P3, the fourth node P4, the fifth node P5, and the sixth node P6. If the third end is coupled to the fourth node P4, an output voltage provided by the third end is the direct current voltage; or if the third end is coupled to any one of the second node P2, the third node P3, the fifth node P5, and the sixth node P6, an output voltage provided by the third end is the pulse width modulation PWM voltage. In FIG. 10, an example in which the third end is coupled to the fourth node P4 is used.

In a charging/discharging process of the charging/discharging circuit shown in FIG. 10, if the switched capacitor SC circuit 401 is in a working state, in the discharging process, when a discharging voltage is less than the first voltage threshold, a gate of M4, a gate of M5, a gate of M6, and a gate of M7 are separately configured to receive a third control signal S3, a gate of M8 and a gate of M10 are separately configured to receive a fourth control signal S4, and a gate of M9 and a gate of M11 are separately configured to receive a fifth control signal S5. The third control signal S3 is used to turn off M4, M5, M6, and M7, the fourth control signal S4 is used to turn on M8 and M10, and the fifth control signal S5 is used to turn off M9 and M11. Alternatively, the third control signal S3 is used to turn off M4, M5, M6, and M7, the fourth control signal S4 is used to turn off M8 and M10, and the fifth control signal S5 is used to turn on M9 and M11.

In the charging process, when an input power supply voltage is less than or equal to the third voltage threshold, the gate of M4, the gate of M5, and the gate of M8 are separately configured to receive a sixth control signal S6, and the gate of M6, the gate of M7, the gate of M9, the gate of M10, and the gate of M11 are separately configured to receive a seventh control signal S7. The sixth control signal S6 is used to turn on M4, M5, and M8, and the seventh control signal S7 is used to turn off M6, M7, M9, M10, and M11. In the charging process, when an input power supply voltage is greater than the fourth voltage threshold, a specific working process of the switched capacitor SC circuit 401 is similar to that in the conventional technology. Details are not described herein again.

In another possible embodiment, as shown in FIG. 11, the switched capacitor SC circuit 401 includes a fourth transistor M4, a fifth transistor M5, a sixth transistor M6, a seventh transistor M7, an eighth transistor M8, a ninth transistor M9, a tenth transistor M10, an eleventh transistor M11, a twelfth transistor M12, a thirteenth transistor M13, a third capacitor C3, a fourth capacitor C4, and a fifth capacitor C5. M4, C3, M7, C4, and M13 are coupled in series between the first end and the second end of the switched capacitor SC circuit. A drain of M4 and one end of C3 are coupled to a second node P2, and the other end of C3 and a drain of M7 are coupled to a third node P3. A source of M7 and one end of C4 are coupled to a fourth node P4, and the other end of C4 and a drain of M13 are coupled to a fifth node P5. M6 is coupled between a GND and the third node P3. M12 is coupled between the GND and the fifth node P5. M5, C5, and M9 are coupled in series between the second node P2 and the GND. A drain of M5 and one end of C5 are coupled to a sixth node P6, and the other end of C5 and a source of M9 are coupled to a seventh node P7. M8 is coupled between the sixth node P6 and the second end. M10 is coupled between the seventh node P7 and the second end. M11 is coupled between the fourth node P4 and the second end.

The voltage received by the first end is 4VI, the voltage provided by the second end is VI, a voltage of the second node P2 is a voltage that alternates between 2VI and 4VI, a voltage of the third node P3 is a voltage that alternates between 0 and 2VI, a voltage of the fourth node P4 is a voltage that alternates between VI and 2VI, a voltage of the fifth node P5 is a voltage that alternates between 0 and VI, a voltage of the sixth node P6 is a voltage that alternates between 2VI and VI, and a voltage of the seventh node P7 is a voltage that alternates between VI and 0. In an actual application, the third end may be coupled to any one of the second node P2, the third node P3, the fourth node P4, the fifth node P5, the sixth node P6, and the seventh node P7. In this embodiment, the output voltage provided by the third end is the pulse width modulation PWM voltage. In FIG. 11, an example in which the third end is coupled to the second node P2 is used.

In a charging/discharging process of the charging/discharging circuit shown in FIG. 11, if the switched capacitor SC circuit 401 is in a working state, in the discharging process, when a discharging voltage is less than the first voltage threshold, a gate of M4, a gate of M6, a gate of M7, a gate of M11, a gate of M12, and a gate of M13 are separately configured to receive a third control signal S3, a gate of M5 and a gate of M10 are separately configured to receive a fourth control signal S4, and a gate of M8 and a gate of M9 are separately configured to receive a fifth control signal S5. The third control signal S3 is used to turn off M4, M6, M7, M11, M12, and M13, the fourth control signal S4 is used to turn on M5 and M10, and the fifth control signal S5 is used to turn off M8 and M9. Alternatively, the third control signal S3 is used to turn off M4, M6, M7, M11, M12, and M13, the fourth control signal S4 is used to turn off M5 and M10, and the fifth control signal S5 is used to turn on M8 and M9.

In the charging process, when an input power supply voltage is less than or equal to the third voltage threshold, the gate of M4 is configured to receive a sixth control signal S6, and the gate of M5, the gate of M6, the gate of M7, the gate of M8, the gate of M9, the gate of M10, the gate of M11, the gate of M12, and the gate of M13 are separately configured to receive a seventh control signal S7. The sixth control signal S6 is used to turn on M4, and the seventh control signal S7 is used to turn off M5, M6, M7, M8, M9, M10, M11, M12, and M13. In the charging process, when an input power supply voltage is greater than the fourth voltage threshold, a specific working process of the switched capacitor SC circuit 401 is similar to that in the conventional technology. Details are not described herein again.

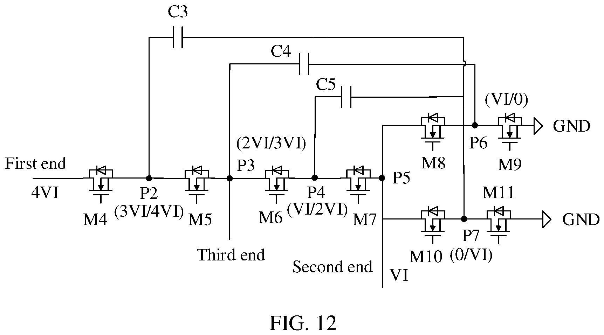

In still another possible embodiment, as shown in FIG. 12, the switched capacitor SC circuit 401 includes, the switched capacitor SC circuit includes a fourth transistor M4, a fifth transistor M5, a sixth transistor M6, a seventh transistor M7, an eighth transistor M8, a ninth transistor M9, a tenth transistor M10, an eleventh transistor M11, a third capacitor C3, a fourth capacitor C4, and a fifth capacitor C5. M4, M5, M6, M7, M8, and M9 are coupled in series between the first end of the switched capacitor SC circuit and a GND. A drain of M4 and a source of M5 are coupled to a second node P2. A drain of M5 and a source of M6 are coupled to a third node P3. A drain of M6 and a source of M7 are coupled to a fourth node P4. A drain of M7 and a source of M8 are coupled to a fifth node P5. A drain of M8 and a source of M9 are coupled to a sixth node P6. M10 and M11 are coupled in series between the fifth node P5 and the GND. A drain of M10 and a source of M11 are coupled to a seventh node P7. C3 is coupled between the second node P2 and the seventh node P7. C4 is coupled between the third node P3 and the sixth node P6. C5 is coupled between the fourth node P4 and the seventh node P7. The fifth node P5 is coupled to the second end.

The voltage received by the first end is 4VI, the voltage provided by the second end is VI, a voltage of the second node P2 is a voltage that alternates between 3VI and 4VI, a voltage of the third node P3 is a voltage that alternates between 2VI and 3VI, a voltage of the fourth node P4 is a voltage that alternates between VI and 2VI, a voltage of the fifth node P5 is VI, a voltage of the sixth node P6 is a voltage that alternates between VI and 0, and a voltage of the seventh node P7 is a voltage that alternates between 0 and VI. In an actual application, the third end may be coupled to any one of the second node P2, the third node P3, the fourth node P4, the sixth node P6, and the seventh node P7. In this embodiment, the output voltage provided by the third end is the pulse width modulation PWM voltage. In FIG. 12, an example in which the third end is coupled to the third node P3 is used.

In a charging/discharging process of the charging/discharging circuit shown in FIG. 12, if the switched capacitor SC circuit 401 is in a working state, in the discharging process, when a discharging voltage is less than the first voltage threshold, a gate of M4, a gate of M5, a gate of M8, and a gate of M9 are separately configured to receive a third control signal S3, a gate of M6 and a gate of M10 are separately configured to receive a fourth control signal S4, and a gate of M7 and a gate of M11 are separately configured to receive a fifth control signal S5. The third control signal S3 is used to turn off M4, M5, M8, and M9, the fourth control signal S4 is used to turn on M6 and M10, and the fifth control signal S5 is used to turn off M7 and M11. Alternatively, the third control signal S3 is used to turn off M4, M5, M8, and M9, the fourth control signal S4 is used to turn off M6 and M10, and the fifth control signal S5 is used to turn on M7 and M11.

In the charging process, when an input power supply voltage is less than or equal to the third voltage threshold, the gate of M4 and the gate of M5 are separately configured to receive a sixth control signal S6, and the gate of M6, the gate of M7, the gate of M8, the gate of M9, the gate of M10, and the gate of M11 are separately configured to receive a seventh control signal S7. The sixth control signal S6 is used to turn on M4 and M5, and the seventh control signal S7 is used to turn off M6, M7, M8, M9, M10, and M11. In the charging process, when an input power supply voltage is greater than the fourth voltage threshold, a specific working process of the switched capacitor SC circuit 401 is similar to that in the conventional technology. Details are not described herein again.

An embodiment of this application provides a charging/discharging method, applied to a charging/discharging circuit including a switched capacitor SC circuit. The switched capacitor SC circuit has a first end, a second end, and a third end. The method includes: The switched capacitor SC circuit converts, in a charging process, an input power supply voltage received by the first end into a charging voltage, and outputs the charging voltage via the second end to charge a battery; and the switched capacitor SC circuit converts, in a discharging process, a discharging voltage that is released by the battery and that is received by the second end into an output voltage, and outputs the output voltage via the third end, where the output voltage is a direct current voltage or a pulse width modulation PWM voltage.

Based on this, an embodiment of this application further provides a power supply chip. The power supply chip may include any charging/discharging circuit provided above. Further, when each circuit module in the charging/discharging circuit is implemented by using a different transistor, inductor, or capacitor, the transistor in the charging/discharging circuit may be integrated into the power supply chip, and the inductor and the capacitor other than the transistor may not be integrated into the power supply chip.

An embodiment of this application further provides an electronic device. The electronic device may include a terminal device. The terminal device includes a load, a battery, and a charging/discharging circuit. The charging/discharging circuit may include any charging/-discharging circuit provided above.

It should be noted that for related descriptions of the charging/discharging circuit, refer to related descriptions of the charging/discharging circuit provided above. Details are not described herein again in this embodiment of this application.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A charging/discharging circuit, comprising a switched capacitor SC circuit, configured to charge/-discharge a battery, wherein the switched capacitor SC circuit comprises:

   a first end, configured to receive an input power supply voltage;
   a second end, configured to: provide a charging voltage for a battery in a charging process, and receive a discharging voltage released by the battery in a discharging process; and
   a third end, configured to provide an output voltage, wherein the output voltage is a direct current voltage or a pulse width modulation PWM voltage.

2. The charging/discharging circuit according to claim 1, wherein the output voltage is the pulse width modulation PWM voltage, and the charging/discharging circuit further comprises a direct current conversion circuit, wherein an input end of the direct current conversion circuit is coupled to the third end, and an output end of the direct current conversion circuit is coupled to a load; and
   the direct current conversion circuit is configured to convert the pulse width modulation PWM voltage into a direct current voltage, wherein the direct current voltage is used to supply power to the load.

3. The charging/discharging circuit according to claim 2, wherein the direct current conversion circuit comprises a direct current conversion component and a first capacitor; and one end of the direct current conversion component is coupled to the input end of the direct current conversion circuit, the other end of the direct current conversion component and one end of the first capacitor are separately coupled to the output end of the direct current conversion circuit, the other end of the first capacitor is grounded, and the direct current conversion component is a first inductor or a first transistor.

4. The charging/discharging circuit according to claim 1, wherein the charging/discharging circuit further comprises a buck (Buck) circuit, an input end of the buck (Buck) circuit is coupled to the third end, and an output end of the buck (Buck) circuit is coupled to a load; and
   in the charging process or the discharging process, when the discharging voltage is less than a first voltage threshold, the buck (Buck) circuit is configured to convert the output voltage into a load voltage, wherein the load voltage is used to supply power to the load.

5. The charging/discharging circuit according to claim 4, wherein the buck (Buck) circuit comprises a second transistor, a third transistor, a second inductor, and a second capacitor; and one end of the second transistor is coupled to the input end of the buck (Buck) circuit, the other end of the second transistor, one end of the third transistor, and one end of the second inductor are coupled to a first node, both the other end of the second inductor and one end of the second capacitor are coupled to the output end of the buck (Buck) circuit, both the other end of the third transistor and the other end of the second capacitor are grounded, and a control end of the second transistor and a control end of the third transistor are respectively configured to receive a first control signal and a second control signal.

6. The charging/discharging circuit according to claim 5, wherein the first control signal is used to turn on the second transistor, and the second control signal is used to turn off the third transistor; or the first control signal is used to turn off the second transistor, and the second control signal is used to turn on the third transistor.

7. The charging/discharging circuit according to any one of claims 4 to 6, wherein the charging/discharging circuit further comprises a charging/discharging transistor; and one end of the charging/discharging transistor is coupled to the output end of the buck (Buck) circuit, the other end of the charging/discharging transistor is coupled to the second end, and a control end of the charging/discharging transistor is configured to receive a charging/discharging control signal;

   in the discharging process, when the discharging voltage is less than the first voltage threshold, the charging/discharging control signal is used to turn off the charging/discharging transistor;
   in the discharging process, when the discharging voltage is greater than or equal to a second voltage threshold, the charging/discharging control signal is used to turn on the charging/-discharging transistor, and the charging/-discharging transistor is configured to convert the discharging voltage into the load voltage, wherein the load voltage is used to supply power to the load, and the second voltage threshold is greater than or equal to the first voltage threshold; and

in the charging process, when the input power supply voltage is less than or equal to a third voltage threshold, the charging/discharging control signal is used to turn on the charging/-discharging transistor, and the charging/-discharging transistor is configured to convert the load voltage into the charging voltage, wherein the charging voltage is used to charge the battery.

8. The charging/discharging circuit according to any one of claims 1 to 7, wherein in the charging process, when the input power supply voltage is less than or equal to the third voltage threshold, the switched capacitor SC circuit is configured to convert the input power supply voltage into the output voltage;

in the charging process, when the input power supply voltage is greater than a fourth voltage threshold, the switched capacitor SC circuit is further configured to convert the input power supply voltage into the charging voltage, wherein the fourth voltage threshold is greater than or equal to the third voltage threshold; and

in the discharging process, when the discharging voltage is less than the first voltage threshold, the switched capacitor SC circuit is further configured to convert the discharging voltage into the output voltage.

9. The charging/discharging circuit according to any one of claims 1 to 8, wherein the switched capacitor SC circuit comprises a fourth transistor, a fifth transistor, a sixth transistor, a seventh transistor, an eighth transistor, a ninth transistor, a tenth transistor, an eleventh transistor, a third capacitor, a fourth capacitor, and a fifth capacitor; and the fourth transistor, the third capacitor, the seventh transistor, and the fourth capacitor are coupled in series between the first end of the switched capacitor SC circuit and a ground, the fourth transistor and the third capacitor are coupled to a second node, the third capacitor and the seventh transistor are coupled to a third node, the seventh transistor and the fourth capacitor are coupled to a fourth node, the sixth transistor is coupled between the third node and the ground, the fifth transistor, the fifth capacitor, and the ninth transistor are coupled in series between the second node and the ground, the fifth transistor and the fifth capacitor are coupled to a fifth node, the fifth capacitor and the ninth transistor are coupled to a sixth node, the tenth transistor is coupled between the sixth node and the second end, the eighth transistor and the eleventh transistor are coupled in series between the fourth node and the second end, the eighth transistor and the eleventh transistor are coupled to the fifth node, and the third end is coupled to the fourth node.

10. The charging/discharging circuit according to claim 9, wherein in the discharging process, when the discharging voltage is less than the first voltage threshold,

a control end of the fourth transistor, a control end of the fifth transistor, a control end of the sixth transistor, and a control end of the seventh transistor are separately configured to receive a third control signal, a control end of the eighth transistor and a control end of the tenth transistor are separately configured to receive a fourth control signal, and a control end of the ninth transistor and a control end of the eleventh transistor are separately configured to receive a fifth control signal, wherein the third control signal is used to turn off the fourth transistor, the fifth transistor, the sixth transistor, and the seventh transistor, the fourth control signal is used to turn on the eighth transistor and the tenth transistor, and the fifth control signal is used to turn off the ninth transistor and the eleventh transistor; or

the third control signal is used to turn off the fourth transistor, the fifth transistor, the sixth transistor, and the seventh transistor, the fourth control signal is used to turn off the eighth transistor and the tenth transistor, and the fifth control signal is used to turn on the ninth transistor and the eleventh transistor.

11. The charging/discharging circuit according to claim 9, wherein in the charging process, when the input power supply voltage is less than or equal to the third voltage threshold, a control end of the fourth transistor, a control end of the fifth transistor, and a control end of the eighth transistor are separately configured to receive a sixth control signal, and a control end of the sixth transistor, a control end of the seventh transistor, a control end of the ninth transistor, a control end of the tenth transistor, and a control end of the eleventh transistor are separately configured to receive a seventh control signal, wherein the sixth control signal is used to turn on the fourth transistor, the fifth transistor, and the eighth transistor, and the seventh control signal is used to turn off the sixth transistor, the seventh transistor, the ninth transistor, the tenth transistor, and the eleventh transistor.

12. The charging/discharging circuit according to any one of claims 1 to 8, wherein the switched capacitor SC circuit comprises a fourth transistor, a fifth transistor, a sixth transistor, a seventh transistor, an eighth transistor, a ninth transistor, a tenth transistor, an eleventh transistor, a twelfth transistor, a thirteenth transistor, a third capacitor, a fourth capacitor, and a fifth capacitor; and the fourth transistor, the third capacitor, the seventh transistor, the fourth capacitor, and the thirteenth transistor are coupled in series between the first end and the second end of the switched capacitor SC circuit, the fourth transistor and the third capacitor are coupled to a second node, the third capacitor and the seventh transistor are coupled to a third node, the seventh transistor and the fourth capacitor are coupled to a fourth node, the fourth capacitor and the thirteenth transistor are coupled to a fifth node, the sixth transistor is coupled between a ground and the third node, the twelfth transistor is coupled between the ground and the fifth node, the fifth transistor, the fifth capacitor, and the ninth transistor are coupled in series between the second node and the second end, the fifth transistor and the fifth capacitor are coupled to a sixth node, the fifth capacitor and the ninth transistor are coupled to a seventh node, the eighth transistor is coupled between the sixth node and the second end, the tenth transistor is coupled between the seventh node and the second end, the eleventh transistor is coupled between the fourth node and the second end, and the third end is coupled to the second node.

13. The charging/discharging circuit according to claim 12, wherein in the discharging process, when the discharging voltage is less than the first voltage threshold,

a control end of the fourth transistor, a control end of the sixth transistor, a control end of the seventh transistor, a control end of the eleventh transistor, a control end of the twelfth transistor, and a control end of the thirteenth transistor are separately configured to receive a third control signal, a control end of the fifth transistor and a control end of the tenth transistor are separately configured to receive a fourth control signal, and a control end of the eighth transistor and a control end of the ninth transistor are separately configured to receive a fifth control signal, wherein the third control signal is used to turn off the fourth transistor, the sixth transistor, the seventh transistor, the eleventh transistor, the twelfth transistor, and the thirteenth transistor, the fourth control signal is used to turn on the fifth transistor and the tenth transistor, and the fifth control signal is used to turn off the eighth transistor and the ninth transistor; or
the third control signal is used to turn off the fourth transistor, the sixth transistor, the seventh transistor, the eleventh transistor, the twelfth transistor, and the thirteenth transistor, the fourth control signal is used to turn off the fifth transistor and the tenth transistor, and the fifth control signal is used to turn on the eighth transistor and the ninth transistor.

14. The charging/discharging circuit according to claim 12, wherein in the charging process, when the input power supply voltage is less than or equal to the third voltage threshold,
a control end of the fourth transistor is configured to receive a sixth control signal, and a control end of the fifth transistor, a control end of the sixth transistor, a control end of the seventh transistor, a control end of the eighth transistor, a control end of the ninth transistor, a control end of the tenth transistor, a control end of the eleventh transistor, a control end of the twelfth transistor, and a control end of the thirteenth transistor are separately configured to receive a seventh control signal, wherein the sixth control signal is used to turn on the fourth transistor, and the seventh control signal is used to turn off the fifth transistor, the sixth transistor, the seventh transistor, the eighth transistor, the ninth transistor, the tenth transistor, the eleventh transistor, the twelfth transistor, and the thirteenth transistor.

15. The charging/discharging circuit according to any one of claims 1 to 8, wherein the switched capacitor SC circuit comprises a fourth transistor, a fifth transistor, a sixth transistor, a seventh transistor, an eighth transistor, a ninth transistor, a tenth transistor, an eleventh transistor, a third capacitor, a fourth capacitor, and a fifth capacitor; and the fourth transistor, the fifth transistor, the sixth transistor, the seventh transistor, the eighth transistor, and the ninth transistor are coupled in series between the first end of the switched capacitor SC circuit and a ground, the fourth transistor and the fifth transistor are coupled to a second node, the fifth transistor and the sixth transistor are coupled to a third node, the sixth transistor and the seventh transistor are coupled to a fourth node, the seventh transistor and the eighth transistor are coupled to a fifth node, the eighth transistor and the ninth transistor are coupled to a sixth node, the tenth transistor and the eleventh transistor are coupled in series between the fifth node and the ground, the tenth transistor and the eleventh transistor are coupled to a seventh node, the third capacitor is coupled between the second node and the seventh node, the fourth capacitor is coupled between the third node and the sixth node, the fifth capacitor is coupled between the fourth node and the seventh node, the fifth node is coupled to the second end, and the third end is coupled to the third node.

16. The charging/discharging circuit according to claim 15, wherein in the discharging process, when the discharging voltage is less than the first voltage threshold,

a control end of the fourth transistor, a control end of the fifth transistor, a control end of the eighth transistor, and a control end of the ninth transistor are separately configured to receive a third control signal, a control end of the sixth transistor and a control end of the tenth transistor are separately configured to receive a fourth control signal, and a control end of the seventh transistor and a control end of the eleventh transistor are separately configured to receive a fifth control signal, wherein the third control signal is used to turn off the fourth transistor, the fifth transistor, the eighth transistor, and the ninth transistor, the fourth control signal is used to turn on the sixth transistor and the tenth transistor, and the fifth control signal is used to turn off the seventh transistor and the eleventh transistor; or the third control signal is used to turn off the fourth transistor, the fifth transistor, the eighth transistor, and the ninth transistor, the fourth control signal is used to turn off the sixth transistor and the tenth transistor, and the fifth control signal is used to turn on the seventh transistor and the eleventh transistor.

17. The charging/discharging circuit according to claim 15, wherein in the charging process, when the input power supply voltage is less than or equal to the third voltage threshold, a control end of the fourth transistor and a control end of the fifth transistor are separately configured to receive a sixth control signal, and the sixth transistor, the seventh transistor, the eighth transistor, the ninth transistor, the tenth transistor, and the eleventh transistor are separately configured to receive a seventh control signal, wherein the sixth control signal is used to turn on the fourth transistor and the fifth transistor, and the seventh control signal is used to turn off the sixth transistor, the seventh transistor, the eighth transistor, the ninth transistor, the tenth transistor, and the eleventh transistor.

18. A charging/discharging method, applied to a charging/discharging circuit comprising a switched capacitor SC circuit, wherein the switched capacitor SC circuit has a first end, a second end, and a third end; and the method comprises:

converting, by the switched capacitor SC circuit in a charging process, an input power supply voltage received by the first end into a charging voltage, and outputting the charging voltage via the second end to charge a battery; and converting, by the switched capacitor SC circuit in a discharging process, a discharging voltage that is released by the battery and that is received by the second end into an output voltage, and outputting the output voltage via the third end, wherein the output voltage is a direct current voltage or a pulse width modulation PWM voltage.

19. A power supply chip, wherein the power supply chip comprises the charging/discharging circuit according to any one of claims 1 to 17.

20. An electronic device, wherein the electronic device comprises a load, a battery, and the charging/discharging circuit according to any one of claims 1 to 17, an output end of the charging/discharging circuit is coupled to the load, and an input/output end of the charging/discharging circuit is coupled to the battery.

FIG. 1

EP 4 507 158 A1

101 Memory

102 Processor

104 Multimedia component
Touch panel
Camera

103 Sensor component
Gyro sensor
Light sensor

106 Input/Output interface

105 Power supply

FIG. 2

Terminal device

Power adapter

vbus

Charging/ Discharging circuit

Load

Battery

FIG. 3

Third end

First end

Switched capacitor SC circuit 401

Second end

FIG. 4

First end

Switched capacitor SC circuit 401

Second end

Third end

Direct current
conversion circuit 402

GND

FIG. 5

First end

Switched capacitor SC circuit 401

Second end

Third end

Direct current
conversion circuit 402

L1

C1

GND

FIG. 6

First end

Switched capacitor SC circuit 401

Second end

Third end

Direct current
conversion circuit 402

M1

C1

GND

FIG. 7

GND

Buck conversion circuit 403

Third end

M0

First end

Switched capacitor SC circuit 401

Second end

FIG. 8

Buck conversion circuit 403

P1    L2

M2

M3    C2

GND

M0

Third end

First end

Switched capacitor SC circuit 401

Second end

FIG. 9

FIG. 10

FIG. 11

FIG. 12

<div align="center">

**INTERNATIONAL SEARCH REPORT**

</div>

| | International application No. |
|---|---|
| | **PCT/CN2023/101735** |

**A.    CLASSIFICATION OF SUBJECT MATTER**

H02J7/00(2006.01)i

According to International Patent Classification (IPC) or to both national classification and IPC

**B.    FIELDS SEARCHED**

Minimum documentation searched (classification system followed by classification symbols)

H02J,H02M

Documentation searched other than minimum documentation to the extent that such documents are included in the fields searched

Electronic data base consulted during the international search (name of data base and, where practicable, search terms used)

VEN, CNABS, CNTXT, EPTXT, USTXT, CNKI, IEEE: 充电, 放电, 开关电容, 电荷泵, 电压, 不同, 变换, 转换, 负载, 升压, 降压, charg???, discharg???, SC, switch, capacitor, voltage, converter, load, boost, buck

**C.    DOCUMENTS CONSIDERED TO BE RELEVANT**

| Category* | Citation of document, with indication, where appropriate, of the relevant passages | Relevant to claim No. |
|---|---|---|
| X | CN 114142723 A (NUVOLTA SEMICONDUCTOR (HEFEI) CO., LTD.) 04 March 2022 (2022-03-04) <br> description, paragraphs 22-49, and figures 1-12 | 1-20 |
| X | CN 114552975 A (SHANGHAI NUVOLTA SEMICONDUCTOR CO., LTD.) 27 May 2022 (2022-05-27) <br> description, paragraphs 28-58, and figures 1-14 | 1-20 |
| X | CN 113098109 A (GUANGDONG OPPO MOBILE TELECOMMUNICATIONS CORP., LTD.) 09 July 2021 (2021-07-09) <br> description, paragraphs 33-68, and figures 1-14 | 1, 18-20 |
| A | CN 113708466 A (HALO MICROELECTRONICS CO., LTD.) 26 November 2021 (2021-11-26) <br> entire document | 1-20 |
| A | CN 115118155 A (HUAWEI TECHNOLOGIES CO., LTD.) 27 September 2022 (2022-09-27) <br> entire document | 1-20 |
| A | WO 2022159927 A1 (QUALCOMM INC.) 28 July 2022 (2022-07-28) <br> entire document | 1-20 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 September 2023** | **14 September 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/101735**

| Patent document cited in search report | | | Publication date (day/month/year) | Patent family member(s) | | | Publication date (day/month/year) |
|---|---|---|---|---|---|---|---|
| CN | 114142723 | A | 04 March 2022 | CN | 114142723 | B | 26 April 2022 |
| | | | | KR | 102467647 | B1 | 16 November 2022 |
| | | | | US | 11545896 | B1 | 03 January 2023 |
| CN | 114552975 | A | 27 May 2022 | CN | 114552975 | B | 08 November 2022 |
| CN | 113098109 | A | 09 July 2021 | | None | | |
| CN | 113708466 | A | 26 November 2021 | CN | 113708466 | B | 11 March 2022 |
| | | | | US | 11424629 | B1 | 23 August 2022 |
| CN | 115118155 | A | 27 September 2022 | WO | 2022194085 | A1 | 22 September 2022 |
| WO | 2022159927 | A1 | 28 July 2022 | TW | 202249399 | A | 16 December 2022 |
| | | | | US | 2022231518 | A1 | 21 July 2022 |

**EP 4 507 158 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211308046